# EUROPEAN PATENT APPLICATION

(11) **EP 4 723 720 A1**
(43) Date of publication of application: **08.04.2026**
(21) Application number: 23938901.8
(22) Date of filing: 31.05.2023
(51) Int. Cl.: H04W 24/06

(54) **CHANNEL STATE ADJUSTMENT METHOD, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: WU, Hao, Dongguan, Guangdong 523860 (CN); YOU, Xin, Dongguan, Guangdong 523860 (CN); LIN, Xue, Dongguan, Guangdong 523860 (CN)
(74) Representative: RGTH
(86) International application number: PCT/CN2023/097623
(87) International publication number: WO 2024/243910

(57) **Abstract**

The present application relates to a method for adjusting channel state, a terminal device, a network device, a chip, a computer-readable storage medium, a computer program product and a computer program. The method includes: performing, by a terminal device, a first processing in response to that RLF prediction information meets a first condition. The RLF prediction information is obtained by processing RLF associated data related to a current moment using a first model; the first model is obtained by training based on RLF associated data related to a first RLF event; and the first processing is used to adjust the channel state of the terminal device. The present application may effectively reduce the number of RLF events, thereby reducing the service interruption time caused by RLF.

## Description

### TECHNICAL FIELD

The present application relates to the field of communications, and more specifically, to a method for adjusting channel state, a terminal device, a network device, a chip, a computer-readable storage medium, a computer program product, and a computer program.

### BACKGROUND

In a communication system, if a channel state of a serving cell is not good, a radio link failure (RLF) event may occur. The RLF event will trigger the connection re-establishment. The connection re-establishment process takes a long time, resulting in a long service interruption time. It is necessary to consider how to reduce the service interruption time caused by RLF.

### SUMMARY

Embodiments of the present application provide a method for adjusting a channel state, including:
performing, by a terminal device, a first processing in response to that RLF prediction information satisfies a first condition;
wherein the RLF prediction information is obtained by processing RLF associated data related to a current moment using a first model; the first model is obtained by training based on RLF associated data related to a first RLF event; and the first processing is used to adjust the channel state of the terminal device.

Embodiments of the present application provide a method for adjusting a channel state, including:
performing, by a network device, a first processing in response to that RLF prediction information satisfies a first condition;
wherein the RLF prediction information is obtained by processing RLF associated data of a terminal device related to a current moment using a first model; the first model is obtained by training based on RLF associated data related to a first RLF event of the terminal device; the first processing is used to adjust the channel state of the terminal device.

Embodiments of the present application provide a terminal device, including:
a first processing module configured to perform a first processing in response to that RLF prediction information satisfies a first condition;
wherein the RLF prediction information is obtained by processing RLF associated data related to a current moment using a first model; the first model is obtained by training based on RLF associated data related to a first RLF event; and the first processing is used to adjust a channel state of the terminal device.

Embodiments of the present application provides a network device, including:
a second processing module, configured to perform a first processing in response to that RLF prediction information satisfies a first condition;
wherein the RLF prediction information is obtained by processing RLF associated data of a terminal device related to a current moment using a first model; the first model is obtained by training based on RLF associated data related to a first RLF event of the terminal device; the first processing is used to adjust a channel state of the terminal device.

Embodiments of the present application provide a terminal device, including a processor and a memory. The memory is used to store a computer program, and the processor is used to call the computer program stored in the memory and run the computer program to cause the terminal device to perform the above-mentioned method for adjusting channel state.

Embodiments of the present application provide a network device, including a processor and a memory. The memory is used to store a computer program, and the processor is used to call the computer program stored in the memory and run the computer program to cause the network device to perform the above-mentioned method for adjusting channel state.

Embodiments of the present application provide a chip, configured to implement the above-mentioned method for adjusting channel state.

Specifically, the chip includes: a processor configured to call a computer program from a memory and run the computer program to cause a device equipped with the chip to perform the above-mentioned method for adjusting channel state.

Embodiments of the present application provide a computer-readable storage medium configured to store a computer program; the computer program, when executed by a device, causing a device to perform the above-mentioned method for adjusting channel state.

Embodiments of the present application provide a computer program product, including computer program instructions, the computer program instructions causing a computer to perform the above-mentioned method for adjusting channel state.

Embodiments of the present application provide a computer program, the computer program, when executed on a computer, causing the computer to perform the above-mentioned method for adjusting channel state.

In the embodiments of the present application, a first model is obtained by training based on RLF associated data related to a first RLF event, so that the first model can learn data features of the RLF event that actually occurred. Therefore, by processing RLF associated data related to a current moment using the first model, it is possible to obtain accurate RLF prediction information at the current moment. In response to that the RLF prediction information satisfies a predetermined condition, a channel state of a terminal device is adjusted by performing a first processing. Since accurate prediction of RLF events is achieved and the channel state is adjusted based on the accurate prediction, the number of occurrences of RLF events may be effectively reduced, thereby reducing the service interruption time caused by RLF.

### BRIEF DESCRIPTION OF THE DRAWINGS

FIG. 1 is a schematic diagram of a communication system, in accordance with embodiments of the present application.
FIG. 2 is a schematic diagram of a radio link monitoring process.
FIG. 3 is a schematic diagram of conventional conditional handover.
FIG. 4 is a schematic flowchart of a method for adjusting a channel state, in accordance with an embodiment of the present application.
FIG. 5 is a schematic flowchart of a method for adjusting a channel state, in accordance with another embodiment of the present application.
FIG. 6A is a schematic diagram of conditional handover, in accordance with embodiments of the present application.
FIG. 6B is another schematic diagram of conditional handover, in accordance with embodiments of the present application.
FIG. 7 is a schematic block diagram of a terminal device, in accordance with an embodiment of the present application.
FIG8 is a schematic block diagram of a terminal device, in accordance with another embodiment of the present application.
FIG. 9 is a schematic block diagram of a terminal device, in accordance with yet another embodiment of the present application.
FIG. 10 is a schematic block diagram of a terminal device, in accordance with yet another embodiment of the present application.
FIG. 11 is a schematic block diagram of a terminal device, in accordance with yet another embodiment of the present application.
FIG. 12 is a schematic block diagram of a network device, in accordance with an embodiment of the present application.
FIG. 13 is a schematic block diagram of a network device, in accordance with another embodiment of the present application.
FIG. 14 is a schematic block diagram of a network device, in accordance with yet another embodiment of the present application.
FIG. 15 is a schematic block diagram of a network device, in accordance with yet another embodiment of the present application.
FIG. 16 is a schematic block diagram of a network device, in accordance with yet another embodiment of the present application.
FIG. 17 is a schematic structural diagram of a communication device, in accordance with embodiments of the present application.
FIG. 18 is a schematic structural diagram of a chip, in accordance with embodiments of the present application.
FIG. 19 is a schematic block diagram of a communication system, in accordance with embodiments of the present application.

### DETAILED DESCRIPTION

The technical solutions in the embodiments of the present application will be described below in conjunction with the drawings in the embodiments of the present application.

The technical solutions of the embodiments of the present application may be applied to various communication systems, such as a global system of mobile communication (GSM) system, code division multiple access (CDMA) system, wideband code division multiple access (WCDMA) system, general packet radio service (GPRS), long term evolution (LTE) system, advanced long term evolution (LTE-A) system, new radio (NR) system, NR system evolution system, LTE-based access to unlicensed spectrum (LTE-U) system, NR-based access to unlicensed spectrum (NR-U) system, non-terrestrial networks (NTN) system, universal mobile telecommunication system (UMTS), wireless local area networks (WLAN), wireless fidelity (Wifi), fifth-generation communication (5G) system or other communication systems.

Generally speaking, traditional communication systems support a limited number of connections and are easy to implement. However, with the development of communication technology, mobile communication systems will not only support traditional communications, but will also support, for example, device to device (D2D) communication, machine to machine (M2M) communication, machine type communication (MTC), vehicle to vehicle (V2V) communication, or vehicle to everything (V2X) and other terminal-to-terminal direct communications, and the embodiments of the present application may also be applied to these communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum, the unlicensed spectrum may also be considered as a shared spectrum; or the communication system in the embodiments of the present application may also be applied to an authorized spectrum, the authorized spectrum may also be considered as an unshared spectrum.

In the embodiments of the present application, the network device and terminal device are described in conjunction with various embodiments; the terminal device may also be referred to as a user equipment (UE), access terminal, user unit, user station, mobile station, mobile station, remote station, remote terminal, mobile device, user terminal, terminal, wireless communication device, user agent or user device, or the like.

The terminal device may be a station (ST) in a WLAN, a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a next-generation communication system such as a terminal device in an NR network, or a terminal device in a future evolved public land mobile network (PLMN) network.

In the embodiments of the present application, the terminal device may be deployed on land including indoors or outdoors, handheld, wearable or vehicle-mounted, or may be deployed on the water surface (e.g., ships) or under the water surface (e.g., submarines), or may also be deployed in the air (e.g., airplanes, balloons and satellites).

In the embodiments of the present application, the terminal device may be a mobile phone, a tablet computer (Pad), a computer with wireless transceiver function, a virtual reality (VR) terminal device, an augmented reality (AR) terminal device, a terminal device in a personal internet of things (PIoT), a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home, etc.

As an example but not limitation, in an embodiments of the present application, the terminal device may also be a wearable device. The wearable device may also be referred to be as a wearable smart device, which is a general term for the intelligent design and development of wearable devices for daily wear using wearable technology, such as glasses, gloves, watches, clothing and shoes. A wearable device is a portable device that is worn directly on the body or integrated into the user's clothing or accessories. Wearable devices are not just hardware devices, but also realize powerful functions through software support, data interaction, and cloud interaction. In a broad sense, wearable smart devices include those that are fully functional, large in size, and capable of achieving complete or partial functions without relying on smartphones, such as smart watches or smart glasses, as well as those that only focus on a certain type of application function and need to be used in conjunction with other devices such as smartphones, such as various smart bracelets and smart jewelry for vital sign monitoring.

In the embodiments of the present application, the network device may be a device for communicating with a mobile device. The network device may be an access point (AP) in WLAN, a base station (BTS) in GSM or CDMA, a base station (NodeB, NB) in WCDMA, an evolved base station (eNB or eNodeB) in LTE, or a relay station or access point, or a vehicle-mounted device, a wearable device, a network device (gNB) in an NR network, or a network device in a future evolved PLMN network, or a network device in an NTN network, etc.

As an example but not limitation, in the embodiments of the present application, the network device may have a mobile feature; for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station arranged on land, water or the like.

In the embodiments of the present application, a network device may provide services for a cell, and a terminal device may communicate with the network device through transmission resources (e.g., frequency domain resources, or spectrum resources) used by the cell. The cell may be a cell corresponding to a network device (e.g., a base station). The cell may belong to a macro base station or a base station corresponding to a small cell. The small cells here may include: a metro cell, a micro cell, a pico cell, and a femto cell. These small cells have the characteristics of small coverage and low transmission power, and are suitable for providing high-speed data transmission services.

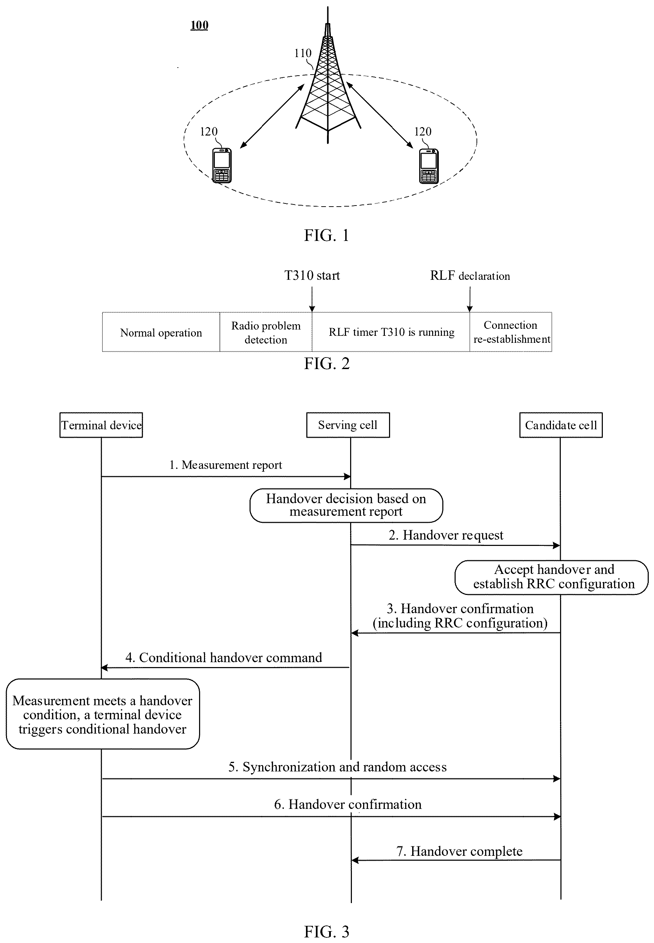

FIG. 1 exemplarily shows a communication system 100. The communication system includes a network device 110 and two terminal devices 120. In a possible implementation, the communication system 100 may include a plurality of network devices 110, and each network device 110 may include another number of terminal devices 120 within its coverage area, which is not limited in the embodiments of the present application.

In a possible implementation, the communication system 100 may also include a mobility management entity (MME), an access and mobility management function (AMF), and other network entities, which is not limited in the embodiments of the present application.

The network equipment may include access network devices and core network devices. That is, the wireless communication system also includes multiple core networks for communicating with access network devices. The access network device may be an evolutional node B (eNB or e-NodeB), a macro base station, a micro base station (also referred to as a "small base station"), a pico base station, an access point (AP), a transmission point (TP) or a new generation Node B (gNodeB) in a long-term evolution (LTE) system, a next-generation (mobile communication system) (next radio, NR) system or an authorized auxiliary access long-term evolution (LAA-LTE) system.

It will be understood that a device having a communication function in a network/system in the embodiments of the present application may be referred to as a communication device. Considering the communication system shown in FIG. 1 as an example, the communication device may include a network device and terminal device with communication functions. The network device and terminal device may be specific devices in the embodiments of the present application, which will not be repeated here. The communication device may also include other devices in the communication system, such as network controllers, mobile management entities and other network entities, which is not limited to the embodiments of the present application.

It should be understood that the terms "system" and "network" are often used interchangeably herein. The term "and/or" herein is merely a description of the association relationship of associated objects, indicating that three relationships may exist. For example, A and/or B can mean: A exists alone, A and B exist at the same time, and B exists alone. In addition, the character "/" in this article generally indicates that the previous and next associated objects are in an "or" relationship.

It should be understood that the "indication" mentioned in the embodiments of the present application may be a direct indication, an indirect indication, or an indication of an associated relationship. For example, A indicates B, which may mean that A directly indicates B, for example, B may be obtained through A; it may also mean that A indirectly indicates B, for example, A indicates C, and B may be obtained through C; it can also mean that there is an association relationship between A and B.

In the description of the embodiments of the present application, the term "corresponding" may indicate a direct or indirect correspondence between two items, or an association relationship between the two items, or a relationship between indication and being indicated, configuration and being configured, and the like.

To facilitate understanding of the technical solutions of the embodiments of the present application, the related art of the embodiments of the present application are described below. The following related art may be arbitrarily combined with the technical solutions of the embodiments of the present application as optional solutions, and they all belong to the protection scope of the embodiments of the present application.

### (1) Radio link failure (RLF)

A UE in the radio resource control (RRC) connected state (i.e., RRC_CONNECTED state) will continuously monitor the downlink radio link quality of the serving cell during mobility. The network will determine the synchronization and desynchronization status of the channel based on the signal quality of the synchronization signal block (SSB) or channel state information reference signal (CSI-RS).

FIG. 2 shows a schematic diagram of a radio link monitoring process. In the radio problem detection phase, when the block error rate (BLER) of N310 physical downlink control channels (PDCCHs) is continuously monitored to be greater than 10%, it is considered that distortion has occurred. As shown in FIG. 2, a T310 timer is started, N310 is a set value configured by the network. Before the T310 timer expires, if the BLER of N311 PDCCHs is continuously detected to be less than 2%, it is considered that the signal is resynchronized, the T310 timer is stopped, and the radio link of the UE is restored; N311 is a set value configured by the network. Otherwise, when the T310 timer expires, it is determined that a radio link failure has occurred, triggering the RLF declaration of the UE and connection re-establishment process.

### (2) Reporting of failure events

When the UE encounters RLF, the UE will record the RLF-related information in the RLF report (VarRLF-Report). The RLF report includes RLF-Report-r16 and PLMN-IdentityList2-r16. The RLF-Report-r16 includes the global cell ID and tracking area code of the serving cell, and the reference signal receiving power (RSRP), the reference signal receiving quality (RSRQ), the signal to interference plus noise ratio (SINR) information, the time from failure to reconnection, and the location information of the serving/neighboring cell. This information will be uploaded to the network side to help the network optimize switching parameters and detect coverage issues. The VarRLF-Report on the UE side will be released within 48 hours after RLF occurs.

### (3) Conditional handover (CHO)

FIG. 3 is a schematic diagram of conventional conditional handover. Conditional handover is a handover mechanism. In conditional handover, the serving cell decides one or more candidate cells for conditional handover based on the measurement report (reported when RSRP is lower than the preset threshold), sends a handover request to the candidate cell and obtains the configuration information of the candidate cell, and then sends a conditional handover command to the UE. The UE determines whether the conditional handover triggering conditions (included in the conditional handover command) are met based on the measurement results of the candidate cells. If a candidate cell is found to meet the handover condition, a subsequent random access process is performed on the cell.

The triggering conditions for conditional handover may include one or more of the following five conditions:
Conditional event A3 (CondEvent A3): the measurement result of the conditional handover candidate cell being better than the offset value set based on the measurement result of the Primary Cell (PCell)/Primary Secondary Cell (PSCell);
Conditional event A4 (CondEvent A4): the measurement result of the conditional handover candidate cell being better than the set threshold;
Conditional event A5 (CondEvent A5): the measurement result of the PCell/PSCell being worse than the set threshold 1, and the measurement result of the conditional handover candidate cell being better than the set threshold 2;
Conditional event D1 (CondEvent D1): a distance between the UE and a reference location referenceLocation1 becoming greater than a configured threshold distance ThreshFromReference1, and a distance between the UE and a reference location referenceLocation2 of the conditional handover candidate cell becoming less than a configured threshold distance ThreshFromReference2;
Conditional event T1 (CondEvent T1): the time measured at the UE being greater than a threshold t1 but less than (Threshold t1 + Duration).

The two trigger conditions CondEvent A3 and CondEvent A5 are suitable for all types of conditional handover; CondEvent A4, CondEvent D1 and CondEvent T1 are currently only applicable to non-terrestrial networks (NTN) and conditional PSCell change (CPC) scenarios. In NTN, conditional handover may be configured with one or two trigger conditions, CondEvent T1 and CondEvent D1 must be configured together with one of CondEvent A3/A4/A5. In a case where two trigger conditions are configured, they must be met simultaneously to trigger the random access process of the UE.

In a case where the conditional handover is configured with multiple candidate cells, the UE attempts to access one of them. However, when access fails due to channel deterioration, load balancing, etc., the UE may reselect a candidate cell to try to access. If it fails again, the conditional handover process fails and the UE needs to perform a connection re-establishment process. Only two attempts are made because the candidate cells for conditional handover are configured based on the RSRP reported by measurement before a period of time. As the UE moves or the channel changes, the CHO configuration may become outdated. Frequent use of the candidate cells in the conditional handover command for random access may increase the service interruption time.

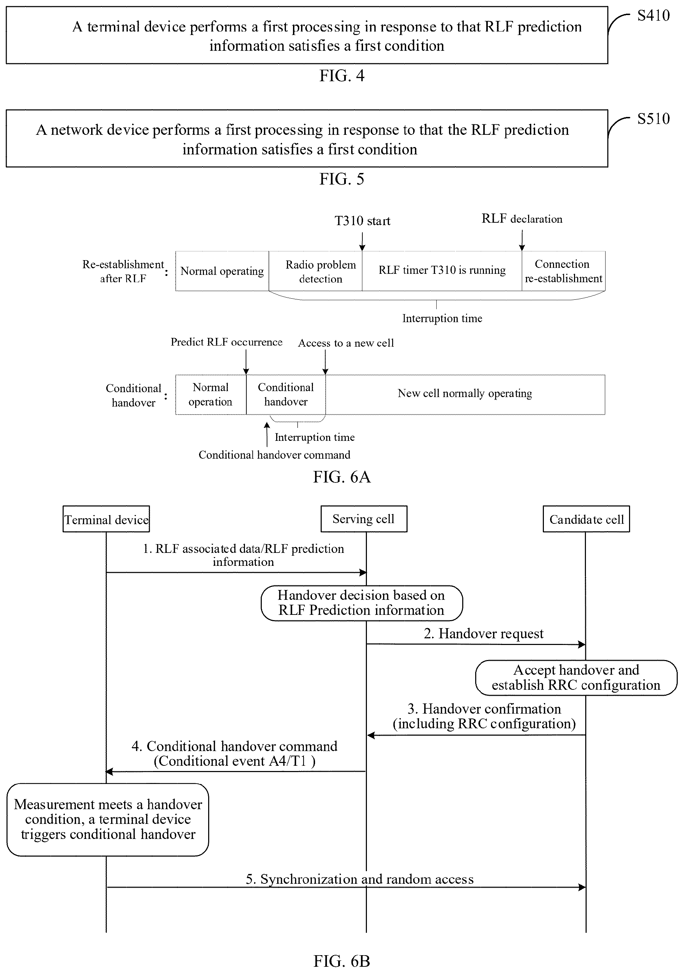

FIG. 4 is a schematic flowchart of a method for adjusting channel state, in accordance with an embodiment of the present application. The method may optionally be applied to the system shown in FIG. 1, but is not limited thereto. The method includes:
S410, performing, by a terminal device, a first processing in response to that the RLF prediction information satisfies a first condition.

The RLF prediction information is obtained by processing RLF associated data related to a current moment using a first model; the first model is obtained by training based on the RLF associated data related to a first RLF event; the first processing is used to adjust the channel state of the terminal device.

In the embodiments of the present application, the first model is an artificial intelligence (AI) model. Exemplarily, the first model may be a model for predicting a second RLF event by extracting data features of the first RLF event, such as a data feature extraction model. Alternatively, the first model may be a model obtained by supervised training using data of the first RLF event and data in a period in which no RLF event occurs, such as a time series prediction model. Exemplarily, the time series prediction model may include a long short-term memory (LSTM) model.

In the embodiments of the present application, the first model is trained and inferred using RLF associated data. The RLF associated data represents a specific type of data used to predict a RLF event. For example, the RLF associated data may be data of a measurement result type, and the RLF associated data related to the first RLF event may refer to a most recent measurement result of the reference signal when the first RLF event occurred (or a most recently acquired measurement result of the reference signal before the first RLF event occurred); the RLF data related to the current moment may refer to the measurement result of the reference signal obtained at the current moment. The first RLF event is an RLF event that actually occurred.

In the embodiments of the present application, the input information of the first model is RLF associated data, and the output information is RLF prediction information. The RLF prediction information may include any prediction information related to the RLF event, such as whether a second RLF event will occur, or the probability and time of the second RLF event occurring.

Exemplarily, the RLF prediction information may include: whether a second RLF event occurs within a first time window after the current moment, or the probability of the second RLF event occurring within the first time window. The length of the first time window may be predefined or configured by the network device. Optionally, the length of the first time window may be related to a length of a second time window corresponding to training data of the first model. For example, the RLF associated data related to the first RLF event may be RLF associated data acquired within the second time window before the first RLF event occurs, and the length of the second time window is the same as the length of the first time window.

In the embodiments of the present application, the RLF prediction information may be obtained by the terminal device using the first model, or may be obtained by the network device using the first model.

In the embodiments of the present application, whether the RLF prediction information satisfies the first condition may be determined by the terminal device or by the network device. If whether the RLF prediction information satisfies the first condition is determined by the network device, the network device may trigger the terminal device to perform the first processing. For example, the network device sends a determination result to the terminal device to trigger the terminal device to perform the first processing, or the network device schedules the terminal device to perform the first processing.

In the embodiments of the present application, the first processing may be any processing method for adjusting the channel state of the terminal device. Exemplarily, the first processing may include cell handover or adjusting a mobile mode. For example, in a case where the RLF prediction information indicates that a second RLF event will occur, the terminal device performs a cell handover. In this way, by actively performing a cell handover before the second RLF event occurs, the channel state of the terminal device may be adjusted to avoid the need to perform a more time-consuming connection re-establishment after the second RLF event occurs. For another example, in a case where the RLF prediction information indicates that a second RLF event will occur, for a movable terminal device, such as an unmanned aerial vehicle (UAV), a better channel condition may be obtained by adjusting the mobile mode.

In the method provided in the above embodiments, the first model is obtained by training using the RLF associated data related to the first RLF event, so that the first model may learn the features of the RLF associated data corresponding to the RLF event that actually occurred. Therefore, by using the first model to process the RLF associated data related to the current moment, accurate RLF prediction information at the current moment may be obtained. In a case where the RLF prediction information satisfies a predetermined condition, the terminal device adjusts the channel state of the terminal device by performing the first process. Since accurate prediction of RLF events is achieved and channel state is adjusted based on the accurate prediction, the occurrence of RLF events may be effectively avoided and the service interruption time caused by RLF may be reduced.

In some embodiments, the RLF associated data includes at least one of the following:
a measurement result of a serving cell;
an identifier of the serving cell;
a measurement result of a neighboring cell;
an identifier of the neighboring cell; and
location-related information of the terminal device.

Accordingly, the RLF associated data related to the current moment includes at least one of the following: a measurement result of a serving cell related to the current moment; an identifier of the serving cell related to the current moment; a measurement result of a neighboring cell related to the current moment; an identifier of the neighboring cell related to the current moment; location-related information of the terminal device related to the current moment.

Similarly, the RLF associated data related to the first RLF event includes at least one of the following: a measurement result of a serving cell related to the first RLF event; an identifier of the serving cell related to the first RLF event; a measurement result of a neighboring cell related to the first RLF event; an identifier of the neighboring cell related to the first RLF event; and location-related information of the terminal device related to the first RLF event.

In an implementation, the RLF associated data includes a measurement result of the serving cell and an identifier of the serving cell. The identifier may be a physical cell identifier (PCI). In another implementation, the RLF associated data may include a measurement result of a neighboring cell and location information of the terminal device. It will be noted that the configuration of the RLF associated data may not be limited to the above implementation manner. For example, the RLF associated data may also only include the measurement result of the serving cell. In specific implementation, the configuration may be made based on the model effect, system requirements, or protocol agreements, which are not exhaustively listed here.

In some embodiments, the above measurement result may include at least one of RSRP, RSRQ and SINR. Exemplarily, the measurement result of the serving cell may include at least one of an RSRP of the serving cell, an RSRQ of the serving cell, and an SINR of the serving cell; for example, the measurement result of the serving cell includes the RSRP of the serving cell and the RSRQ of the serving cell, or includes the RSRP of the serving cell and the SINR of the serving cell. Similarly, the measurement result of the neighboring cell may include at least one of an RSRP of the neighboring cell, an RSRQ of the neighboring cell and an SINR of the neighboring cell; for example, the measurement result of the neighboring cell includes the RSRQ of the neighboring cell and the SINR of the serving cell, or includes the RSRP of the serving cell and the SINR of the serving cell. In specific implementation, the measurement results may be set to include one or more of the above information according to the model effect, system requirements, or protocol agreements, which will not exhaustive here.

In some embodiments, the above-mentioned location-related information may include at least one of location collection moment, longitude and latitude information, and moving speed estimation information.

In some embodiments, the RLF associated data related to the current moment includes RLF associated data acquired at the current moment and/or RLF associated data acquired within a second time window before the current moment. The second time window represents a time window with a predetermined duration.

Exemplarily, the RLF associated data acquired at the current moment may include at least one of the following: a measurement result of the serving cell acquired at the current moment, an identifier of the serving cell where the terminal device is located at the current moment, a measurement result of the neighboring cell acquired at the current moment, an identifier of the neighboring cell at the current moment, and the location-related information of the terminal device at the current moment.

Exemplarily, the RLF associated data acquired within the second time window before the current moment may include at least one of the following: a measurement result of the serving cell acquired within the second time window before the current moment; an identifier of the serving cell within the second time window before the current moment; a measurement result of the neighboring cell acquired within the second time window before the current moment; an identifier of the neighboring cell within the second time window before the current moment; and location-related information of the terminal device acquired within the second time window before the current moment.

It will be noted that, in the case where the RLF associated data related to the current moment includes both the RLF associated data acquired at the current moment and the RLF associated data acquired within the second time window before the current moment, the RLF associated data acquired at the current moment and the RLF associated data acquired within the second time window before the current moment may be data of the same type or data of different types. For example, the RLF associated data related to the current moment includes the measurement result of the serving cell acquired at the current moment, and the RLF associated data acquired within the second time window before the current moment includes the location-related information of the terminal device acquired within the second time window.

In an application example, the RLF associated data includes the measurement result of the serving cell and the location information of the terminal device. Accordingly, the RLF associated data related to the current moment may include the measurement result of the serving cell and the location information of the terminal device at the current moment, or include the measurement result of the serving cell and the location information of the terminal device within the second time window before the current moment, or include the measurement result of the serving cell at the current moment and the location information of the terminal device within the second time window before the current moment.

In some embodiments, the RLF associated data related to the first RLF event includes: RLF associated data most recently acquired before the first RLF event occurs, and/or RLF associated data acquired within a second time window before the first RLF event occurs.

Exemplarily, the RLF associated data most recently acquired before the first RLF event occurs may include at least one of the following: a measurement result of the serving cell most recently acquired before the first RLF event occurs, an identifier of the serving cell most recently acquired before the first RLF event occurs, a measurement result of the neighboring cell most recently acquired before the first RLF event occurs, an identifier of the neighboring cell most recently acquired before the first RLF event occurs, and location related information of the terminal device most recently acquired before the first RLF event occurs.

Exemplarily, the RLF associated data acquired within the second time window before the first RLF event occurs may include at least one of the following: a measurement result of the serving cell acquired within the second time window before the first RLF event occurs; an identifier of the serving cell within the second time window before the first RLF event occurs; a measurement result of the neighboring cell acquired within the second time window before the first RLF event occurs; an identifier of the neighboring cell acquired within the second time window before the first RLF event occurs; and location-related information of the terminal device acquired within the second time window before the first RLF event occurs.

It will be noted that, in the case where the RLF associated data related to the first RLF event includes both the RLF associated data most recently acquired before the first RLF event occurs and the RLF associated data acquired within the second time window before the first RLF event occurs, the RLF associated data most recently acquired before the first RLF event occurs and the RLF associated data acquired within the second time window before the first RLF event occurs may be data of the same type or data of different types. For example, the RLF associated data most recently acquired before the first RLF event occurs includes the measurement result of the serving cell most recently acquired before the first RLF event occurs, and the RLF associated data acquired within the second time window before the first RLF event occurs includes the location-related information of the terminal device acquired within the second time window.

In an application example, the RLF data includes the measurement result of the serving cell and location information of the terminal device. Accordingly, the RLF associated data related to the first RLF event may include the most recently acquired measurement result of the serving cell and the location information of the terminal device before the first RLF event occurs, or include the most recently acquired measurement result of the serving cell and the location information of the terminal device within the second time window, or include the most recently acquired measurement result of the serving cell and the location information of the terminal device within the second time window before the first RLF event occurs.

It will be noted that the measurement result of the serving cell and/or the measurement result of the neighboring cell within the second time window may include results of one or more measurement of the reference signal, and the number of measurements is determined by the length of the second time window.

Optionally, the length of the second time window is configured by the network device. Furthermore, the network device may send configuration information of the length of the second time window to the terminal device, so that the terminal device can determine the length and extract the RLF associated data within the second time window according to the length.

It will be noted that, for different terminal devices, the network device may be configured with the same time window length or different time window lengths. Exemplarily, the length of the second time window is related to a speed of the terminal device and/or a preset number of position samplings. Exemplarily, the length of the second time window may be determined based on the speed of the terminal device and/or a preset number of position samplings. For example, the faster the terminal device is, the shorter the second time window is. For another example, at least 5 position samplings are included within the second time window. For another example, in the case where the speed of the terminal device is less than a preset threshold, 5 position samplings are included within the second time window; in the case where the speed of the terminal device is greater than or equal to the preset threshold, 8 position samplings are included within the second time window. In practical applications, the configuration information of the first time window may be explicitly given in the form of an enumerated information element (IE). For example, the configuration information may refer to the following settings, the length indicating the first time window MeasWindow may be one of 2000 milliseconds (ms), 5000 ms and 10000 ms.

MeasWindow ::= ENUMERATED {2000 ms, 5000 ms, 10000 ms, spare1},
where spare1 indicates the location reserved for future expansion.

Corresponding to the above embodiments, the present application also provides a prediction information processing method performed by a network device. FIG. 5 is a schematic flowchart of a method for adjusting a channel state, in accordance with another embodiment of the present application. The method may optionally be applied to the system shown in FIG. 1, but is not limited thereto. The method includes:
S510, in response to that the RLF prediction information satisfies a first condition, the network device performing a first processing.

The RLF prediction information is obtained by processing the RLF associated data of the terminal device related to the current moment using a first model; the first model is obtained by training based on the RLF associated data related to the first RLF event of the terminal device; the first processing is used to adjust the channel state of the terminal device.

Optionally, the network device performs the first processing, which may be the network device and the terminal device completing the first processing through interaction. For example, the first processing may be cell handover or adjusting the mobile mode of the terminal device.

Optionally, the setting and processing of relevant information, such as the RLF prediction information, the first model, RLF associated data, may refer to the corresponding description of the method performed by the terminal device in the aforementioned embodiments, which will not be repeated here one by one.

In order to more clearly understand the technical solution of the present application, corresponding embodiments are provided below for the training process of the first model, the determination of the RLF prediction information (i.e., the reasoning process of the first model), and the processing method according to the RLF prediction information.

In some embodiments, the above method may further include: the terminal device sending first reporting information; the first reporting information including the RLF associated data related to the first RLF event, and the RLF associated data related to the first RLF event being used for the network device performing training to obtain the first model.

Correspondingly, at the network side, the above method may further include: the network device receiving the first reporting information from the terminal device. In some embodiments, the above method may further include: the network device performing training based on the RLF associated data related to the first RLF event to obtain the first model.

That is, the terminal device reports the RLF associated data before the first RLF event occurs to the network device, and then the network device performing training using the data reported by the terminal device to obtain the first model.

In some embodiments, the terminal device sending the first reporting information may include at least one of the following:
in response to that the connection re-establishment triggered by the first RLF event is completed, the terminal device sending the first reporting information;
the terminal device sending the first reporting information when the channel is idle; and
the terminal device periodically sending the first reporting information.

Accordingly, the network device receiving the first reporting information from the terminal device may include at least one of the following:
in response to that the connection re-establishment triggered by the first RLF event is completed, the network device receiving first reporting information;
the network device receiving the first reporting information when the channel of the terminal device is idle; and
the network device periodically sending the first reporting information.

That is to say, the terminal device reports the RLF associated data related to the first RLF event to the network device, which may report based on an event. Since the terminal device can store RLF information within 48 hours, the terminal device may report autonomously when the channel is idle, or report periodically. In actual applications, the terminal device may report the RLF associated data related to the first RLF event in one or more ways. For example, the terminal device may send the first reporting information in response to that the connection re-establishment is completed, and periodically send the first reporting information, so that the network device can receive the first reporting information in time when the connection re-establishment is completed, and periodically receive first reporting information summarized within a period. Thus, the reliability of data reporting is improved. During specific implementation, the reporting manner may be set according to system requirements or protocol agreements, which are not exhaustively listed here.

Exemplarily, reporting autonomously when the channel is idle may specifically be: when the channel is idle, the terminal device applying to the network device for an uplink scheduling resource, and reporting based on the scheduling of the network device. Since the RLF event is a sporadic event, reporting being performed in response to that the connection re-establishment is completed or when the channel is idle may achieve good scheduling flexibility.

In some embodiments, the first reporting information is carried by an RRC message, a media access control control element (MAC control element, MAC CE) or an uplink control information (UCI).

Optionally, the first reporting information may be carried in a newly defined or dedicated RRC message, MAC CE or UCI, or may be multiplexed with other RRC messages, MAC CE or UCI.

Exemplarily, the first reporting information may be carried by a RLF report. The RLF report may refer to VarRLF-Report included in the RRC message UEInformationResponse. That is, the RLF associated data related to the first RLF event may be reported together with the original data in the RLF report. Optionally, the first reporting information may also be reported in other RRC messages such as UEAssistanceInformation, which is not limited in the present application.

According to the above embodiments, the terminal device reports RLF associated data related to the actually occurred RLF event, and the model is trained at the network side. In this way, a first model with high accuracy is obtained by training using the strong computing power at the network side and the RLF associated data of multiple terminal devices that is related to the RLF events that have occurred.

In some embodiments, the network device performing training to obtain a first model based on RLF associated data related to the first RLF event, includes: the network device extracting feature information from the RLF associated data related to the first RLF event, and performing training based on the feature information to obtain the first model.

Exemplarily, the first model may be a data feature extraction model.

Since the network device can collect a large amount of RLF associated data related to the actual RLF events from multiple terminal devices, the training of the first model is achieved by extracting feature information from real data, which has the advantage of low implementation difficulty and guarantees the prediction accuracy of the first model to a certain extent.

In some embodiments, the network device performing training to obtain the first model based on RLF associated data related to the first RLF event, includes: the network device performing training based on the RLF associated data related to the first RLF event and non-RLF associated data to obtain the first model.

The non-RLF associated data includes at least one of the following:
a measurement result of the serving cell within a third time window in a period in which no RLF event occurs;
an identifier of the serving cell;
a measurement result of the neighboring cell within the third time window in the period in which no RLF event occurs;
an identifier of the neighboring cell; and
location-related information of the terminal device within the third time window in the period in which no RLF event occurs.

Optionally, a length of the third time window may be the same as the length of the second time window in the aforementioned embodiments.

In an implementation, the non-RLF associated data may include a measurement result of the serving cell within the third time window and an identifier of the serving cell. In another implementation, the non-RLF associated data may include at least one of a measurement result of the neighboring cell within a third time window in the period in which no RLF event occurs, an identifier of the neighboring cell, and location-related information of the terminal device within the third time window.

It will be noted that the setting of the non-RLF associated data may not be limited to the above implementation manner. For example, the non-RLF associated data may also only include the measurement result of the serving cell within the third time window. In specific implementation, the settings may be made based on the model effect, system requirements, or protocol agreements, which are not exhaustively listed here.

According to the above embodiments, the network device performing supervised training, using the measurement result(s), cell identifier(s), location-related information and other data before the first RLF event occurs as well as the measurement result(s), cell identifier(s), location-related information and other data during the period in which no RLF event occurs, to obtain the first model. In these embodiments, the classification ability of the first model may be improved through positive and negative data, which is beneficial to improving prediction accuracy.

In some embodiments, the network device may include an access network device and/or a core network element.

Exemplarily, the network device may include an access network device, and the access network device receives the first reporting information and performs the above-mentioned model training steps.

Exemplarily, the training and management of the first model may occur at different locations on the network side. Specifically, the network device may include an access network device and a core network element; the access network device is used to receive the first reporting information, i.e., to collect training data; the core network element is used to train the first model.

Correspondingly, the above method may further include: the access network device sending first reporting information to the core network element, and the first reporting information is used for the core network element to perform training to obtain the first model.

Optionally, the core network element may be a network data analytics function (NWDAF) network element. The NWADF network element has powerful computing power, which may help improve the accuracy of the first model.

Optionally, the access network device may also be used to manage the first model, such as model monitoring, model activation, or model deactivation.

As the amount of data associated with RLF events increases, the parameter of the first model is constantly changing, and the prediction capability of the first model will continue to improve. Considering the low frequency of RLF, the first model may be obtained by offline training, that is, the model is deployed and inferred after training.

In the embodiments of the present application, the reasoning process of the first model may be implemented on the network side or the terminal side. Accordingly, the first model may be deployed in the network device or in the terminal device.

In some embodiments, the reasoning process of the first model is implemented on the terminal side, that is, the RLF prediction information is determined by the terminal device. The above method further includes: the network device sending first configuration information to the terminal device, the first configuration information being used for the terminal device to configure the first model.

Correspondingly, on the terminal side, the above method further includes: the terminal device receiving first configuration information, the first configuration information including relevant information of the first model; and the terminal device configuring the first model based on the first configuration information. Exemplarily, the relevant information of the first model may include the type and parameter of the first model and other information.

That is to say, the network device may send the configuration information of the trained first model to the terminal device, so that the terminal device can configure the first model and use the first model to process the RLF associated data related to the current moment to obtain RLF prediction information.

In some embodiments, the first processing for adjusting the channel state of the terminal device may be triggered by the network device, based on which the terminal device may perform reporting to the network device after obtaining the RLF prediction information. Specifically, the above method further includes: the terminal device sending second reporting information, the second reporting information being used to indicate the RLF prediction information. Correspondingly, on the network side, the above method further includes: the network device receiving the second reporting information from the terminal device.

Exemplarily, the second reporting information may include RLF prediction information, and may also include indication information of the RLF prediction information. For example, in the case where the RLF prediction information includes the probability of the second RLF event occurring, the second reporting information may include the probability value. For another example, in the case where the RLF prediction information includes whether a second RLF event occurs, the second reporting information may include 1-bit indication information; the bit value is 1, which indicates that a second RLF event occurs; and the bit value is 0, which indicates that a second RLF event does not occur. Alternatively, the second reporting information may indicate the occurrence of a second RLF event by carrying a specific field, and indicates that a second RLF event does not occur when the field is empty.

In some embodiments, the reasoning process of the first model is implemented on the network side, that is, the RLF prediction information is determined by the network device. The above method may further include: the terminal device sending third reporting information, the third reporting information including the RLF associated data related to the current moment, and the RLF associated data related to the current moment being used for the network device to obtain the RLF prediction information using the first model.

Correspondingly, on the network side, the above method may further include: the network device receiving third reporting information from the terminal device, the third reporting information including the RLF associated data related to the current moment; and the network device processing the RLF associated data related to the current moment using the first model to obtain the RLF prediction information.

It has been explained in the above-mentioned embodiments that in response to that the RLF prediction information satisfies the first condition, the terminal device and the network device will perform the first processing; the first condition may be a condition for predicting the occurrence of the RLF event. Exemplarily, the first condition may include: the RLF prediction information indicating that a second RLF event occurs within a first time window after the current moment, or the RLF prediction information indicating that a probability of a second RLF event occurring within the first time window is greater than a first threshold.

The first threshold may be preset, configured by the network device, or configured by the terminal device. Exemplarily, the network device or the terminal device may adjust the first threshold according to the effect of the first model to further reduce the number of occurrences of RLF events or reduce the number for performing the first process.

In some embodiments, the RLF prediction information may further include:
a first time interval, the first time interval being a time interval between the current moment and a moment when a second RLF event occurs after the current moment;
identifiers of candidate cell(s); and
recommended values of the candidate cell(s).

Exemplarily, the RLF prediction information may include a first time interval, and the terminal device may perform the first processing according to the first time interval, for example, determine a relevant parameter in the first processing according to the first time interval.

Exemplarily, the RLF prediction information may include identifiers of the candidate cell(s) and recommendation values of the candidate cell(s). In this way, in the case where the first processing is cell handover, the terminal device may determine a candidate cell to be accessed based on an identifier of a candidate cell and the recommended value of the candidate cell, thereby improving the success rate of the cell handover.

As described in the foregoing embodiments, the first process may include cell handover or adjusting a mobile mode. In some embodiments, the cell handover may include a conditional handover.

The conditional handover process includes downlink synchronization, uplink synchronization and resource allocation, while the connection re-establishment process after the RLF event includes cell search, downlink synchronization, system information acquisition, uplink synchronization and resource allocation. In comparison, connection re-establishment requires two steps: cell search and system information acquisition. Generally speaking, the duration required for cell search and system information acquisition is greater than the duration required for uplink/downlink synchronization and resource allocation. Therefore, before the radio link fails, or when it is predicted that RLF will occur, performing a conditional handover operation may effectively reduce the service interruption time.

FIG. 6A shows a schematic diagram of conditional handover in the embodiments of the present application. As shown in FIG. 6A, the conditional handover performed based on the prediction result may skip the radio problem detection phase and T310 timer phase, while avoiding the connection re-establishment process, so that the service interruption time is significantly reduced.

In the related art, when performing conditional handover, the network device needs to send a conditional handover command to the terminal device after obtaining the candidate cell configuration information. The conditional handover command may carry relevant information of the candidate cell and indication information of one or more conditional events. In some embodiments of the present application, the conditional event carried in the conditional handover command may be Conditional event A4 (CondEvent A4).

Specifically, the network device performing the first processing included in the above method, includes: the network device sending a conditional handover command to the terminal device. The conditional handover command is used to indicate relevant information of N candidate cells and a first conditional event, so that the terminal device selects a first candidate cell from the N candidate cells for access in response to that the first conditional event occurs, and the first conditional event including a conditional event A4, where N is an integer greater than or equal to 1.

Accordingly, on the terminal side, the terminal device performing the first process, includes:
the terminal device receiving a conditional handover command from the network device; the conditional handover command being used to indicate relevant information of N candidate cells and a first conditional event, and the first conditional event including a conditional event A4, and N is an integer greater than or equal to 1; and
in response to that the first condition event occurs, the terminal device selecting a first candidate cell from N candidate cells for access.

When conditional handover is used to actively avoid RLF, the channel condition of the serving cell (or a source cell) may still be good. Therefore, selecting the conditional event A4 as the trigger condition for accessing a candidate cell may improve the success rate of the handover.

In some embodiments, the first conditional event further includes a conditional event T1 (CondEvent T1), and a second threshold and/or duration in the conditional event T1 is determined by the network device based on the first time interval in the RLF prediction information. The second threshold refers to a threshold parameter in the conditional event T1, such as t1-Threshold.

Optionally, if the RLF prediction information includes a first time interval, i.e., a time interval between the current moment and the predicted occurrence moment of the second RLF event, the first conditional event includes a conditional event T1.

It will be noted that in the case where the first conditional event includes a conditional event A4 and a conditional event T1, the terminal device needs to selects a first candidate cell from the N candidate cells for access in response to that the conditional event A4 and the conditional event T1 are both satisfied. In the case where the conditional event T1 is configured as empty, i.e., the first conditional event only includes the conditional event A4, the terminal device may select the first candidate cell for access in response to that the conditional event A4 is met, without waiting for the measurement time to exceed the first threshold.

In the above embodiments, if the terminal device successfully accesses the first candidate cell, the conditional handover process is completed. If the terminal device fails to access the first candidate cell, the terminal may select a second candidate cell for access.

In some embodiments, the terminal device may adopt the CHO mechanism in the aforementioned related art to trigger a connection re-establishment process when failing to access the second candidate cell. That is, only two attempts are made to access the candidate cell.

In some embodiments, the terminal device performing the first process, further includes:
in response to failing to access the first candidate cell, the terminal device selecting a second candidate cell from other candidate cells except the first candidate cell of the N candidate cells for access; and
in response to that the second condition is met, the terminal device performing connection re-establishment; the second condition including: failing to access to each of the N candidate cells, or an access duration exceeding a third threshold, and the third threshold being determined based on a relevant parameter of the first condition event.

That is to say, the terminal device may reselect another candidate cell in the conditional handover command for access until the access is successful, or trigger the connection re-establishment process in response to failing to access to each candidate cell or the access duration exceeding the third threshold.

In some embodiments, the third threshold may be determined based on the second threshold and/or the duration of the first conditional event. Exemplarily, the third threshold is a sum of the second threshold and the duration.

The AI technology may provide one or more candidate cells based on historical access conditions, which may reflect the connectable status of the candidate cell in the future to a certain extent. These candidate cells may be considered trustworthy, that is, the terminal device may establish a connection with these candidate cells to obtain services. Therefore, the candidate cells given by the first model may be tried as much as possible to avoid the connection re-establishment process, so as to reduce service interruptions.

FIG. 6B shows another schematic diagram of conditional handover in the embodiments of the present application. As shown in FIG. 6B, the conditional handover triggered by RLF prediction information in the embodiments of the present application includes the following steps.
1. The serving cell receives the RLF associated data or receives the RLF prediction information; if the RLF associated data is received, the RLF associated data is processed using the first model to obtain the RLF prediction information.
2. The serving cell sends a handover request to the candidate cell.
3. After the candidate cell accepts the handover and establishes the RRC configuration, the serving cell receives the handover confirmation information, which includes the RRC configuration information of the candidate cell.
4. The serving cell sends a conditional handover command to the terminal device. Taking into account that the channel condition of the source serving cell may still be good when conditional handover is adopted to actively avoid RLF, the conditional handover command should select condEventA4.
   Optionally, if the RLF prediction information includes the time from the current moment to the occurrence moment of RLF, the conditional handover command also includes condEventT1, and the specific values of "t1-Threshold" and the duration are configured by the network according to the time from the current moment to the occurrence moment of RLF. If this configuration is empty, the terminal device may directly enable the condEventA4 condition determination without waiting for the t1-Threshold time to enabling; if this configuration is not empty, the candidate cell needs to meet both condEventA4 and condEventT1 before trying to access the cell).
5. In response to that the measurement meets the handover condition (i.e., the condition event A4/T1), the terminal device triggers conditional handover and performs synchronization and random access for the candidate cell.

If the access is successful, the handover process is completed. If access fails, the terminal device may reselect another candidate cell for access attempt. If access still fails, the terminal device may trigger the connection re-establishment process, or continue to select other candidate cells for access until there are no other untried candidate cells or the time for attempting to access exceeds a third threshold. It can be seen that the difference between the conditional handover in the embodiments of the present application and the traditional conditional handover is as follows.

| | Conditional handover in the embodiments of the present application | Traditional conditional handover |
|---|---|---|
| Process start condition | Prediction for occurrence of RLF | RSRP of a serving cell is less than a preset threshold |
| Handover decision of serving cell | Based on AI prediction results | Based on a measurement report of UE |
| Trigger condition | CondEvent A4 + T1 | CondEvent A3/A5 |
| Number of allowed connections | Up to a number of candidate cells | 2 times |

It should be noted that, the embodiments of performing cell handover based on RLF prediction information are provided in the above description by taking conditional handover as an example, but in some embodiments of the present application, traditional cell handover may also be used as the first processing, and since the traditional cell handover is an active handover based on AI prediction, the radio problem detection phase and T310 timer phase may be skipped, and the reconnection process may be avoided. Thus, the service interruption time is reduced.

It can be seen that the embodiments of the present application provide an AI-based RLF event data collection, prediction and processing method, which mainly considers the use of AI technology to learn the behavioral characteristics of UE failure events, combined with the current channel measurement result, location and other information of UE, to predict possible RLF events. By preparing for active handover in advance, the service interruption time of UE is reduced, and user experience is improved.

It will be noted that the cell in the embodiments of the present application may be a PCell, a PSCell, or a secondary cell (SCell); that is, the embodiments of the present application may support a carrier aggregation scenario and a dual connectivity scenario.

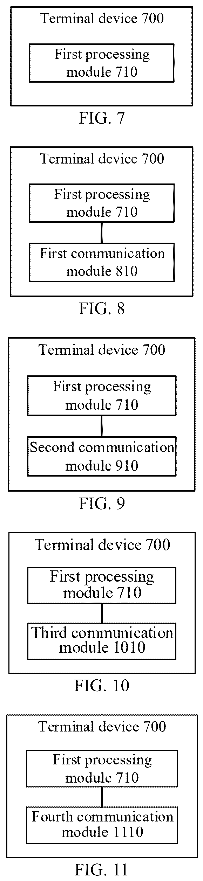

FIG. 7 is a schematic block diagram of a terminal device 700, in accordance with an embodiment of the present application. The terminal device 700 may include:
a first processing module 710 configured to perform a first processing in response to that the radio link failure (RLF) prediction information satisfies a first condition;
wherein the RLF prediction information is obtained by processing the RLF associated data related to the current moment using the first model; the first model being obtained by training based on the RLF associated data related to the first RLF event, and the first processing being used to adjust the channel state of the terminal device.

In an implementation, the RLF prediction information includes:
whether a second RLF event occurs within a first time window after the current moment; or
a probability of a second RLF event occurring within the first time window.

In an implementation, the RLF associated data related to the current moment includes the RLF associated data acquired at the current moment and/or the RLF associated data acquired within a second time window before the current moment.

In an implementation, the RLF associated data related to the first RLF event includes: RLF associated data most recently acquired before the first RLF event occurs, and/or RLF associated data acquired within a second time window before the first RLF event occurs.

In an implementation, a length of the second time window is configured by the network device.

In an implementation, a length of the second time window is related to the speed of the terminal device and/or a preset number of position samplings.

In an implementation, the RLF associated data includes at least one of the following:
a measurement result of a serving cell;
an identifier of the serving cell;
a measurement result of a neighboring cell;
an identifier of a neighboring cell; and
location-related information of the terminal device.

In an embodiment, the measurement result includes at least one of a reference signal receiving power (RSRP), a reference signal receiving quality (RSRQ), and a signal to interference plus noise ratio (SINR).

In an implementation, the location-related information includes at least one of location collection moment, longitude and latitude information, and moving speed estimation information.

In an implementation, as shown in FIG. 8, the terminal device 700 further includes a first communication module 810, configured to:
send first reporting information, the first reporting information including RLF associated data related to the first RLF event, and the RLF associated data related to the first RLF event being used for the network device performing training to obtain a first model.

In an implementation, the first communication module 810 is configured to perform at least one of the following:
sending first reporting information in response to that the connection re-establishment triggered by the first RLF event is completed;
sending first reporting information when the channel is idle; and
sending the first reporting information periodically.

In an implementation, the first reporting information is carried by an RRC message, a MAC CE or a UCI.

In an implementation, the first reporting information is carried by a RLF report.

In an implementation, the RLF prediction information is determined by the terminal device.

As shown in FIG. 9, the terminal device 700 further includes a second communication module 910 configured to receive first configuration information, the first configuration information including relevant information of the first model.

The first processing module 710 is further configured to configure the first model based on the first configuration information.

In an implementation, the second communication module 910 is further configured to:
send second reporting information; the second reporting information being used to indicate RLF prediction information.

In an implementation, as shown in FIG. 10, the terminal device 700 further includes a third communication module 1010 configured to:
send third reporting information, the third reporting information including RLF associated data related to the current moment, and the RLF associated data related to the current moment being used for the network device to obtain RLF prediction information using the first model.

In an embodiment, the first condition includes:
the RLF prediction information indicating that a second RLF event occurs within a first time window after the current moment; or
the RLF prediction information indicating that a probability of the second RLF event occurring within the first time window is greater than a first threshold.

In an implementation, the RLF prediction information further includes at least one of the following:
a first time interval, the first time interval being a time interval between the current moment and a moment when a second RLF event occurs after the current moment;
identifiers of a candidate cell(s); and
recommended values of the candidate cell(s).

In an embodiment, the first processing includes cell handover or adjusting a mobile mode.

In an implementation, the cell handover includes conditional handover.

In an implementation, as shown in FIG. 11, the terminal device 700 further includes a fourth communication module 1110 configured to:
receive a conditional handover command from the network device, the conditional handover command being used to indicate relevant information of N candidate cells and a first conditional event, the first conditional event including a conditional event A4, where N is an integer greater than or equal to 1.

The first processing module 710 is further configured to select a first candidate cell from the N candidate cells for access in response to that a first condition event occurs.

In an implementation, the first conditional event further includes a conditional event T1, and a second threshold and/or duration in the conditional event T1 is determined by the network device based on the first time interval in the RLF prediction information.

In an implementation, the first processing module 710 is further configured to:
select a second candidate cell for access from other candidate cells except the first candidate cell of the N candidate cells in response to failing to access the first candidate cell; and
perform connection re-establishment in response to that the second condition is met, the second condition including: failing to access to each of the N candidate cells, or an access duration exceeding a third threshold, the third threshold being determined based on a relevant parameter of the first condition event.

The terminal device 700 in the embodiments of the present application can implement the corresponding functions of the terminal device in the aforementioned method embodiments. The processes, functions, implementation methods and beneficial effects corresponding to each module (sub-module, unit or component, etc.) in the terminal device 700 may refer to the corresponding description in the above method embodiments, which will not be repeated here. It will be noted that the functions described in the various modules (sub-modules, units or components, etc.) in the terminal device 700 of the application embodiments may be implemented by different modules (sub-modules, units or components, etc.) or by the same module (sub-module, unit or component, etc.).

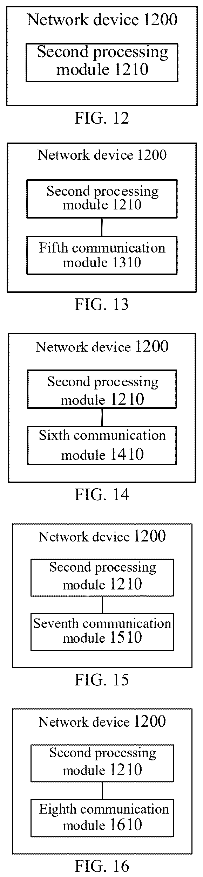

FIG. 12 is a schematic block diagram of a network device 1200, in accordance with an embodiment of the present application. The network device 1200 may include:
a second processing module 1210 configured to perform a first processing in response to that the radio link failure (RLF) prediction information satisfies a first condition;
the RLF prediction information being obtained by processing the RLF associated data of the terminal device related to the current moment using the first model; the first model being obtained by training based on the RLF associated data related to the first RLF event of the terminal device, and the first processing being used to adjust the channel state of the terminal device.

In an implementation, the RLF prediction information includes:
whether a second RLF event occurs within a first time window after the current moment; or
a probability of a second RLF event occurring within the first time window.

In an implementation, the RLF associated data related to the current moment includes the RLF associated data acquired at the current moment and/or the RLF associated data acquired within a second time window before the current moment.

In an implementation, the RLF associated data related to the first RLF event of the terminal device includes the RLF associated data most recently acquired before the first RLF event occurs, and/or the RLF association data acquired within a second time window before the first RLF event occurs.

In an implementation, a length of the second time window is configured by the network device.

In an implementation, a length of the second time window is related to the speed of the terminal device and/or a preset number of position samplings.

In an implementation, the RLF associated data includes at least one of the following:
a measurement result of a serving cell;
an identifier of the serving cell;
a measurement result of a neighboring cell;
an identifier of the neighboring cell; and
location-related information of the terminal device.

In an implementation, the measurement result includes at least one of a reference signal receiving power (RSRP), a reference signal receiving quality (RSRQ), and a signal to interference plus noise ratio (SINR).

In an implementation, the location-related information includes at least one of location collection moment, longitude and latitude information, and moving speed estimation information.

In an implementation, as shown in FIG. 13, the network device 1200 further includes a fifth communication module 1310 configured to:
receive first reporting information from a terminal device, the first reporting information including RLF associated data related to the first RLF event.

In an implementation, the second processing module 1210 is further configured to:
perform training to obtain the first model based on RLF associated data related to the first RLF event.

In an implementation, the second processing module 1210 is further configured to:
extract feature information in the RLF associated data related to the first RLF event, and perform training to obtain the first model based on the feature information.

In an implementation, the second processing module 1210 is further configured to:
perform training to obtain a first model based on the RLF associated data and the non-RLF associated data related to the first RLF event.

The non-RLF associated data includes at least one of the following:
a measurement result of a serving cell within a third time window during a period in which no RLF event occurs;
an identifier of a serving cell;
a measurement result of a neighboring cell within the third time window in a period in which no RLF event occurs;
an identifier of a neighboring cell; and
location-related information of the terminal device within a third time window in a period in which no RLF event occurs.

In an implementation, the network device is an access network device, and the fifth communication module 1310 is further configured such that:
the access network device sends first reporting information to the core network element, the first reporting information being used for the core network element to obtain the first model by training.

In an implementation, the fifth communication module 1310 is configured to perform at least one of the following:
receiving first reporting information in response to that the connection re-establishment triggered by the first RLF event is completed;
receiving the first reporting information when the channel of the terminal device is idle; and
sending the first reporting information periodically.

In an implementation, the first reporting information is carried by an RRC message, a MAC CE or a UCI.

In an implementation, the first reporting information is carried by a RLF report.

In an implementation, as shown in FIG. 14, the network device 1200 further includes a sixth communication module 1410 configured to:
send first configuration information to the terminal device, the first configuration information being used for the terminal device to configure the first model.

In an implementation, the sixth communication module 1410 is further configured to:
receive second reporting information from the terminal device, the second reporting information being used to indicate RLF prediction information.

In an implementation, as shown in FIG. 15, the network device 1200 further includes a seventh communication module 1510 configured to:
receive third reporting information from the terminal device, the third reporting information includes RLF associated data related to the current moment.

The second processing module 1210 is further configured to process the RLF associated data related to the current moment using the first model to obtain the RLF prediction information.

In an embodiment, the first condition includes:
the RLF prediction information indicating that a second RLF event occurs within a first time window after the current moment; or
the RLF prediction information indicating that a probability of a second RLF event occurring within the first time window is greater than a first threshold.

In an implementation, the RLF prediction information further includes at least one of the following:
a first time interval, the first time interval being a time interval between a current moment and a moment when a second RLF event occurs after the current moment;
identifiers of a candidate cell(s); and
recommended values of the candidate cell(s).

In an embodiment, the first processing includes cell handover or adjusting a mobile mode.

In an implementation, the cell handover includes conditional handover.

In an implementation, as shown in FIG. 16, the network device 1200 further includes an eighth communication module 1610 configured to:
send a conditional handover command to a terminal device; wherein the conditional handover command is used to indicate relevant information of N candidate cells and a first conditional event, so that the terminal device selects a first candidate cell from the N candidate cells for access in response to that the first conditional event occurs, the first conditional event includes a conditional event A4, where N is an integer greater than or equal to 1.

In an implementation, the first conditional event further includes a conditional event T1, and a second threshold and/or duration in the conditional event T1 is determined based on the first time interval in the RLF prediction information.

The network device 1200 in the embodiments of the present application can implement the corresponding functions of the network device in the aforementioned method embodiments. The processes, functions, implementation methods and beneficial effects corresponding to each module (sub-module, unit or component, etc.) in the network device 1200 may refer to the corresponding description in the above method embodiments, and will not be repeated here. It will be noted that the functions described in the various modules (sub-modules, units or components, etc.) in the network device 1200 in the embodiments of the application can be implemented by different modules (sub-modules, units or components, etc.) or by the same module (sub-module, unit or component, etc.).

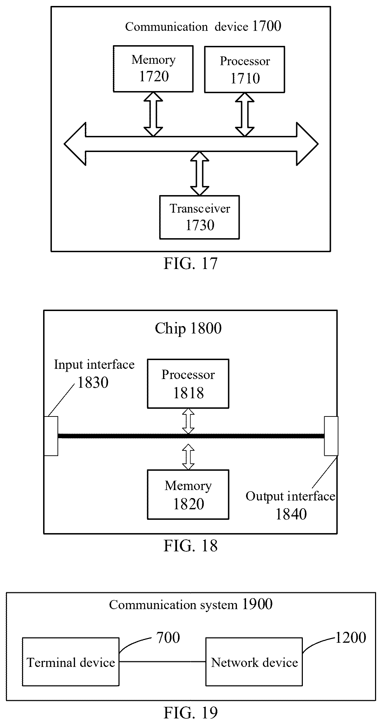

FIG. 17 is a schematic structural diagram of a communication device 1700, in accordance with embodiments of the present application. The communication device 1700 includes a processor 1710, and the processor 1710 may call a computer program from a memory and run the computer program to enable the communication device 1700 to implement the method in the embodiments of the present application.

In an implementation, the communication device 1700 may further include a memory 1720. The processor 1710 may call a computer program from the memory 1720 and run the computer program to enable the communication device 1700 to implement the method in the embodiments of the present application.

The memory 1720 may be a separate device independent of the processor 1710, or may be integrated into the processor 1710.

In an implementation, the communication device 1700 may further include a transceiver 1730, and the processor 1710 may control the transceiver 1730 to communicate with other devices, specifically, may send information or data to other devices, or may receive information or data sent by other devices.

The transceiver 1730 may include a transmitter and a receiver. The transceiver 1730 may further include antenna(s), and the number of antennas may be one or more.

In an implementation, the communication device 1700 may be a terminal device in the embodiments of the present application, and the communication device 1700 may implement the corresponding processes implemented by the terminal device in various methods in the embodiments of the present application, which will not be repeated here for the sake of brevity.

In an implementation, the communication device 1700 may be the network device in the embodiments of the present application, and the communication device 1700 may implement the corresponding processes implemented by the network device in various methods in the embodiments of the present application, which will not be repeated here for the sake of brevity.

FIG. 18 is a schematic structural diagram of a chip 1800, in accordance with embodiments of the present application. The chip 1800 includes a processor 1810, and the processor 1810 may call a computer program from a memory and run the computer program to implement the method in the embodiments of the present application.

In an implementation, the chip 1800 may further include a memory 1820. The processor 1810 may call a computer program from the memory 1820 and run the computer program to implement the method performed by the terminal device in the embodiments of the present application.

The memory 1820 may be a separate device independent of the processor 1810, or may be integrated into the processor 1810.

In an implementation, the chip 1800 may further include an input interface 1830. The processor 1810 may control the input interface 1830 to communicate with other devices or chips, and specifically, may obtain information or data sent by other devices or chips.

In an implementation, the chip 1800 may further include an output interface 1840. The processor 1810 may control the output interface 1840 to communicate with other devices or chips, and specifically, may output information or data to other devices or chips.

In an implementation, the chip may be applied to the terminal device in the embodiments of the present application, and the chip may implement the corresponding processes implemented by the terminal device in the various methods in the embodiments of the present application, which will not be repeated here for the sake of brevity.

In an implementation, the chip may be applied to the network device in the embodiments of the present application, and the chip may implement the corresponding processes implemented by the network device in various methods in the embodiments of the present application, which will not be repeated here for the sake of brevity.

It will be understood that the chip mentioned in the embodiments of the present application may also be referred to as a system-level chip, a system chip, a chip system or a system-on-chip chip, etc.

The processor mentioned above may be a general-purpose processor, a digital signal processor (DSP), a field programmable gate array (FPGA), an application specific integrated circuit (ASIC) or other programmable logic devices, transistor logic devices, discrete hardware components, etc. The general purpose processor mentioned above may be a microprocessor or any conventional processor.

The above-mentioned memory may be a volatile memory or a nonvolatile memory, or may include both volatile and nonvolatile memories. The non-volatile memory may be a read-only memory (ROM), a programmable ROM (PROM), an erasable programmable read-only memory (EPROM), an electrically erasable programmable read-only memory (EEPROM), or a flash memory. The volatile memory may be a random access memory (RAM).

It will be understood that the above-mentioned memory is exemplary but not restrictive. For example, the memory in the embodiments of the present application may also be static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous link dynamic random access memory (synch link DRAM, SLDRAM) and direct memory bus random access memory (Direct Rambus RAM, DR RAM), etc. That is, the memory in the embodiments of the present application is intended to include but is not limited to these and any other suitable types of memory.

FIG. 19 is a schematic block diagram of a communication system 1900, in accordance with embodiments of the present application. The communication system 1900 includes a terminal device 700 and a network device 1200.

The terminal device 700 and the network device 1200 are used to perform a first processing in response to that radio link failure (RLF) prediction information meets a first condition. The RLF prediction information is obtained by processing the RLF associated data related to the current moment using a first model; the first model is obtained by training based on the RLF associated data related to the first RLF event; the first processing is used to adjust a channel state of the terminal device.

The above embodiments may be implemented in whole or in part through software, hardware, firmware or any combination thereof. When the embodiments are implemented by using a software, the software may be implemented in a form of a computer program product in whole or in part. The computer program product includes one or more computer instructions. When the computer program instructions are loaded and executed by a computer, the processes or functions according to the embodiments of the present application are generated in whole or in part. The computer may be a general purpose computer, a special purpose computer, a computer network, or other programmable device. The computer instructions may be stored in a computer-readable storage medium or transmitted from a computer-readable storage medium to another computer-readable storage medium. For example, the computer instructions may be transmitted from a website, computer, server, or data center to another website, computer, server, or data center via a wired manner (e.g., coaxial cable, optical fiber, digital subscriber line (DSL)) or a wireless manner (e.g., infrared, wireless, or microwave) means. The computer-readable storage medium may be any available medium able to be accessed by a computer or may be a data storage device, such as a server or a data center that includes one or more available media. The available medium may be a magnetic medium (e.g., a floppy disk, a hard disk, a magnetic tape), an optical medium (e.g., a DVD), a semiconductor medium (e.g., a solid state disk (SSD)), or the like.

It should be understood that in the various embodiments of the present application, the magnitude of the serial numbers of the above-mentioned processes does not mean the order of execution. The execution order of each process should be determined by its function and internal logic, and will not constitute any limitation on the implementation process in the embodiments of the present application.

Those skilled in the art can clearly understand that, for the convenience and simplicity of description, the specific working processes of the systems, devices and units described above may refer to the corresponding processes in the aforementioned method embodiments, which will not be repeated here.

The above descriptions are merely specific implementations of the present application, but the protection scope of the present application is not limited thereto. Any skilled person in the art can easily think of changes or replacements within the technical scope disclosed in the present application, which should all be included in the protection scope of the present application. Therefore, the protection scope of the present application shall be subject to the protection scope of the claims.

## Claims

1. A method for adjusting channel state, comprising:
performing, by a terminal device, a first processing in response to that radio link failure (RLF) prediction information satisfies a first condition;
wherein the RLF prediction information is obtained by processing RLF associated data related to a current moment using a first model; the first model is obtained by training based on the RLF associated data related to a first RLF event; and the first processing is used to adjust the channel state of the terminal device.

2. The method according to claim 1, wherein the RLF prediction information includes:
whether a second RLF event occurs within a first time window after the current moment; or
a probability of the second RLF event occurring within the first time window.

3. The method according to claim 1 or 2, wherein the RLF associated data related to the current moment includes RLF associated data acquired at the current moment and/or RLF associated data acquired within a second time window before the current moment.

4. The method according to any one of claims 1 to 3, wherein the RLF associated data related to the first RLF event includes RLF associated data most recently acquired before the first RLF event occurs, and/or RLF-associated data acquired within a second time window before the first RLF event occurs.

5. The method according to claim 3 or 4, wherein a length of the second time window is configured by a network device.

6. The method according to any one of claims 3 to 5, wherein a length of the second time window is related to a speed of the terminal device and/or a preset number of position samplings.

7. The method according to any one of claims 1 to 6, wherein the RLF associated data comprises at least one of following:
a measurement result of a serving cell;
an identifier of the serving cell;
a measurement result of a neighboring cell;
an identifier of the neighboring cell; and
location-related information of the terminal device.

8. The method according to claim 7, wherein the measurement result includes at least one of a reference signal receiving power (RSRP), a reference signal receiving quality (RSRQ), and a signal to interference plus noise ratio (SINR).

9. The method according to claim 7 or 8, wherein the location-related information includes at least one of location collection moment, longitude and latitude information, and moving speed estimation information.

10. The method according to any one of claims 1 to 9, wherein the method further comprises:
sending, by the terminal device, first reporting information; wherein the first reporting information includes the RLF associated data related to the first RLF event, and the RLF associated data related to the first RLF event is used for a network device performing training to obtain the first model.

11. The method according to claim 10, wherein sending, by the terminal device, the first reporting information, includes at least one of following:
sending, by the terminal device, the first reporting information in response to that connection re-establishment triggered by the first RLF event is completed;
sending, by the terminal device, the first reporting information when a channel is idle; and
sending, by the terminal device, the first reporting information periodically.

12. The method according to claim 10 or 11, wherein the first reporting information is carried by a radio resource control (RRC) message, a media access control control element (MAC CE) or an uplink control information (UCI).

13. The method according to any one of claims 10 to 12, wherein the first reporting information is carried by a RLF report.

14. The method according to any one of claims 1 to 13, wherein the RLF prediction information is determined by the terminal device;
the method further comprises:
receiving, by the terminal device, first configuration information, wherein the first configuration information includes relevant information of the first model; and
configuring, by the terminal device, the first model based on the first configuration information.

15. The method according to claim 14, wherein the method further comprises:
sending, by the terminal device, second reporting information, the second reporting information being used to indicate the RLF prediction information.

16. The method according to any one of claims 1 to 13, wherein the method further comprises:
sending, by the terminal device, third reporting information; wherein the third reporting information includes the RLF associated data related to the current moment, and the RLF associated data related to the current moment is used for a network device to obtain the RLF prediction information using the first model.

17. The method according to any one of claims 1 to 16, wherein the first condition includes:
the RLF prediction information indicating that a second RLF event occurs within a first time window after the current moment; or
the RLF prediction information indicating that a probability of the second RLF event occurring within the first time window is greater than a first threshold.

18. The method according to any one of claims 1 to 17, wherein the RLF prediction information further includes at least one of following:
a first time interval; wherein the first time interval is a time interval between the current moment and a moment when a second RLF event occurs after the current moment;
identifiers of candidate cell(s); and
recommended values of the candidate cell(s).

19. The method according to any one of claims 1 to 18, wherein the first processing includes cell handover or adjusting a mobile mode.

20. The method of claim 19, wherein the cell handover includes conditional handover.

21. The method according to any one of claims 1 to 20, wherein performing, by the terminal device, the first process, includes:
receiving, by the terminal device, a conditional handover command from a network device; wherein the conditional handover command is used to indicate relevant information of N candidate cells and a first conditional event, the first conditional event includes a conditional event A4, and N is an integer greater than or equal to 1; and
selecting, by the terminal device, a first candidate cell from the N candidate cells for access in response to that the first condition event occurs.

22. The method according to claim 21, wherein the first conditional event further includes a conditional event T1, and a second threshold and/or duration in the conditional event T1 is determined by the network device based on a first time interval in the RLF prediction information.

23. The method according to claim 21 or 22, wherein performing, by the terminal device, the first process, further includes:
in response to failing to access the first candidate cell, selecting, by the terminal device, a second candidate cell for access from candidate cells except the first candidate cell of the N candidate cells; and
performing, by the terminal device, connection re-establishment in response to that the second condition is met, wherein the second condition includes: failing to access to each of the N candidate cells, or an access duration exceeding a third threshold, the third threshold being determined based on a relevant parameter of the first condition event.

24. A method for adjusting channel state, comprising:
performing, by a network device, a first processing in response to that radio link failure (RLF) prediction information satisfies a first condition;
wherein the RLF prediction information is obtained by processing RLF associated data of a terminal device related to a current moment using a first model; the first model is obtained by training based on RLF associated data related to a first RLF event of the terminal device; and the first processing is used to adjust the channel state of the terminal device.

25. The method according to claim 24, wherein the RLF prediction information includes:
whether a second RLF event occurs within a first time window after the current moment; or
a probability of the second RLF event occurring within the first time window.

26. The method according to claim 24 or 25, wherein the RLF associated data related to the current moment includes RLF associated data acquired at the current moment and/or RLF associated data acquired within a second time window before the current moment.

27. The method according to any one of claims 24 to 26, wherein the RLF associated data related to the first RLF event of the terminal device includes RLF associated data most recently acquired before the first RLF event occurs, and/or RLF associated data acquired within a second time window before the first RLF event occurs.

28. The method according to claim 26 or 27, wherein a length of the second time window is configured by the network device.

29. The method according to any one of claims 26 to 28, wherein a length of the second time window is related to a speed of the terminal device and/or a preset number of position samplings.

30. The method according to any one of claims 24 to 29, wherein the RLF associated data includes at least one of following:
a measurement result of a serving cell;
an identifier of the serving cell;
a measurement result of a neighboring cell;
an identifier of the neighboring cell; and
location-related information of the terminal device.

31. The method according to claim 30, wherein the measurement result includes at least one of a reference signal receiving power (RSRP), a reference signal receiving quality (RSRQ), and a signal to interference plus noise ratio (SINR).

32. The method according to claim 30 or 31, wherein the location-related information includes at least one of location collection current, longitude and latitude information, and moving speed estimation information.

33. The method according to any one of claims 24 to 32, wherein the method further comprises:
receiving, by the network device, first reporting information from the terminal device, wherein the first reporting information includes the RLF associated data related to the first RLF event.

34. The method according to claim 33, wherein the method further comprises:
performing training, by the network device, based on the RLF association data related to the first RLF event to obtain the first model.

35. The method according to claim 34, wherein performing training, by the network device, based on the RLF associated data related to the first RLF event to obtain the first model, includes:
extracting, by the network device, feature information from the RLF associated data related to the first RLF event; and performing training, by the network device, based on the feature information to obtain the first model.

36. The method according to claim 34, wherein performing training, by the network device, based on the RLF associated data related to the first RLF event to obtain the first model, includes:
performing training, by the network device, based on the RLF associated data related to the first RLF event and non-RLF associated data to obtain the first model;
wherein the non-RLF associated data includes at least one of following:
a measurement result of a serving cell within a third time window in a period in which no RLF event occurs;
an identifier of the serving cell;
a measurement result of a neighboring cell within the third time window in the period in which no RLF event occurs;
an identifier of the neighboring cell; and
location-related information of the terminal device within the third time window in a period in which no RLF event occurs.

37. The method according to claim 33, wherein the network device is an access network device, and the method further comprises:
sending, by the access network device, the first reporting information to a core network element, the first reporting information being used for the core network element to perform training to obtain the first model.

38. The method according to any one of claims 33 to 37, wherein receiving, by the network device, the first reporting information from the terminal device, includes at least one of following:
receiving, by the network device, the first reporting information in response to that connection re-establishment triggered by the first RLF event is completed;
receiving, by the network device, the first reporting information when a channel of the terminal device is idle; and
sending, by the network device, the first reporting information periodically.

39. The method according to any one of claims 33 to 38, wherein the first reporting information is carried by a radio resource control (RRC) message, a media access control control element (MAC CE) or an uplink control information (UCI).

40. The method according to any one of claims 33 to 39, wherein the first reporting information is carried by a RLF report.

41. The method according to any one of claims 24 to 40, wherein the method further comprises:
sending, by the network device, first configuration information to the terminal device, wherein the first configuration information is used for the terminal device to configure the first model.

42. The method according to claim 41, wherein the method further comprises:
receiving, by the network device, second reporting information from the terminal device, the second reporting information being used to indicate the RLF prediction information.

43. The method according to any one of claims 24 to 40, wherein the method further comprises:
receiving, by the network device, third reporting information from the terminal device, wherein the third reporting information includes the RLF associated data related to the current moment; and
processing, by the network device, the RLF associated data related to the current moment using the first model to obtain the RLF prediction information.

44. The method according to any one of claims 24 to 43, wherein the first condition includes:
the RLF prediction information indicating that a second RLF event occurs within a first time window after the current moment; or
the RLF prediction information indicating that a probability of the second RLF event occurring within the first time window is greater than a first threshold.

45. The method according to any one of claims 24 to 44, wherein the RLF prediction information further includes at least one of following:
a first time interval, wherein the first time interval is a time interval between the current moment and a moment when a second RLF event occurs after the current moment;
identifiers of candidate cell(s); and
recommended values of the candidate cell(s).

46. The method according to any one of claims 24 to 45, wherein the first processing includes cell handover or adjusting a mobile mode.

47. The method according to claim 46, wherein the cell handover includes a conditional handover.

48. The method according to any one of claims 24 to 47, wherein performing, by the network device, the first process, includes:
sending, by the network device, a conditional handover command to the terminal device, wherein the conditional handover command is used to indicate relevant information of N candidate cells and a first conditional event, so that the terminal device selects a first candidate cell from the N candidate cells for access in response to that the first conditional event occurs; the first conditional event includes a conditional event A4, and N is an integer greater than or equal to 1.

49. The method according to claim 48, wherein the first conditional event further includes a conditional event T1, and a second threshold and/or duration in the conditional event T1 is determined by the network device based on a first time interval in the RLF prediction information.

50. A terminal device, comprising:
a first processing module, configured to perform a first processing in response to that radio link failure (RLF) prediction information satisfies a first condition;
wherein the RLF prediction information is obtained by processing RLF associated data related to a current moment using a first model; the first model is obtained by training based on RLF associated data related to a first RLF event; and the first processing is used to adjust a channel state of the terminal device.

51. The terminal device according to claim 50, wherein the RLF prediction information includes:
whether a second RLF event occurs within a first time window after the current moment; or
a probability of the second RLF event occurring within the first time window.

52. The terminal device according to claim 50 or 51, wherein the RLF associated data related to the current moment includes RLF associated data acquired at the current moment and/or RLF associated data acquired within a second time window before the current moment.

53. The terminal device according to any one of claims 50 to 52, wherein the RLF associated data related to the first RLF event includes RLF associated data most recently acquired before the first RLF event occurs, and/or RLF associated data acquired within a second time window before the first RLF event occurs.

54. The terminal device according to claim 52 or 53, wherein a length of the second time window is configured by a network device.

55. The terminal device according to any one of claims 52 to 54, wherein a length of the second time window is related to a speed of the terminal device and/or a preset number of position samplings.

56. The terminal device according to any one of claims 50 to 55, wherein the RLF associated data includes at least one of following:
a measurement result of a serving cell;
an identifier of the serving cell;
a measurement result of a neighboring cell;
an identifier of the neighboring cell; and
location-related information of the terminal device.

57. The terminal device according to claim 56, wherein the measurement result includes at least one of a reference signal receiving power (RSRP), a reference signal receiving quality (RSRQ), and a signal to interference plus noise ratio (SINR).

58. The terminal device according to claim 56 or 57, wherein the location-related information includes at least one of location collection current, longitude and latitude information, and moving speed estimation information.

59. The terminal device according to any one of claims 50 to 58, wherein the terminal device further comprises a first communication module, configured to:
send first reporting information, wherein the first reporting information includes the RLF associated data related to the first RLF event, and the RLF associated data related to the first RLF event is used for a network device performing training to obtain the first model.

60. The terminal device according to claim 59, wherein the first communication module is configured to perform at least one of following:
sending the first reporting information in response to that connection re-establishment triggered by the first RLF event is completed;
sending the first reporting information when a channel is idle; and
sending the first reporting information periodically.

61. The terminal device according to claim 59 or 60, wherein the first reporting information is carried by a radio resource control (RRC) message, a media access control control element (MAC CE) or an uplink control information (UCI).

62. The terminal device according to any one of claims 59 to 61, wherein the first reporting information is carried by a RLF report.

63. The terminal device according to any one of claims 50 to 62, wherein the RLF prediction information is determined by the terminal device;
the terminal device further comprises a second communication module, configured to receive first configuration information; wherein the first configuration information includes relevant information of the first model;
the first processing module is further configured to configure the first model based on the first configuration information.

64. The terminal device according to claim 63, wherein the second communication module is further configured to:
send second reporting information, the second reporting information being used to indicate the RLF prediction information.

65. The terminal device according to any one of claims 50 to 62, wherein the terminal device further comprises a third communication module, configured to:
send third reporting information, wherein the third reporting information includes the RLF associated data related to the current moment, and the RLF associated data related to the current moment is used for a network device to obtain the RLF prediction information using the first model.

66. The terminal device according to any one of claims 50 to 65, wherein the first condition includes:
the RLF prediction information indicating that a second RLF event occurs within a first time window after the current moment; or
the RLF prediction information indicating that a probability of the second RLF event occurring within the first time window is greater than a first threshold.

67. The terminal device according to any one of claims 50 to 66, wherein the RLF prediction information further includes at least one of following:
a first time interval, wherein the first time interval is a time interval between the current moment and a moment when a second RLF event occurs after the current moment;
identifiers of candidate cell(s); and
recommended values of the candidate cell(s).

68. The terminal device according to any one of claims 50 to 67, wherein the first processing includes cell handover or adjusting a mobile mode.

69. The terminal device according to claim 68, wherein the cell handover includes conditional handover.

70. The terminal device according to any one of claims 50 to 69, wherein the terminal device comprises a fourth communication module, configured to receive a conditional handover command from a network device; wherein the conditional handover command is used to indicate relevant information of N candidate cells and a first conditional event, the first conditional event includes a conditional event A4, and N is an integer greater than or equal to 1;
the first processing module is further configured to select a first candidate cell from the N candidate cells for access in response to that the first condition event occurs.

71. The terminal device according to claim 70, wherein the first conditional event further includes a conditional event T1, and a second threshold and/or duration in the conditional event T1 is determined by the network device based on a first time interval in the RLF prediction information.

72. The terminal device according to claim 70 or 71, wherein the first processing module is further configured to:
select a second candidate cell for access from candidate cells except the first candidate cell of the N candidate cells in response to failing to access the first candidate cell;
perform connection re-establishment in response to that a second condition is met; wherein the second condition includes: failing to access to each of the N candidate cells fails, or an access duration exceeding a third threshold, the third threshold being determined based on a relevant parameter of the first condition event.

73. A network device, comprising:
a second processing module, configured to perform a first processing in response to that radio link failure (RLF) prediction information satisfies a first condition;
wherein the RLF prediction information is obtained by processing RLF associated data of a terminal device related to a current moment using a first model; the first model is obtained by training based on RLF associated data related to a first RLF event of the terminal device; and the first processing is used to adjust a channel state of the terminal device.

74. The network device according to claim 73, wherein the RLF prediction information includes:
whether a second RLF event occurs within a first time window after the current moment; or
a probability of a second RLF event occurring within a first time window.

75. The network device according to claim 73 or 74, wherein the RLF associated data related to the current moment includes RLF associated data obtained at the current moment and/or RLF associated data obtained within a second time window before the current moment.

76. The network device according to any one of claims 73 to 75, wherein the RLF associated data related to the first RLF event of the terminal device includes RLF associated data most recently acquired before the first RLF event occurs, and/or RLF associated data acquired within a second time window before the first RLF event occurs.

77. The network device according to claim 75 or 76, wherein a length of the second time window is configured by the network device.

78. The network device according to any one of claims 75 to 77, wherein a length of the second time window is related to a speed of the terminal device and/or a preset number of position samplings.

79. The network device according to any one of claims 73 to 78, wherein the RLF associated data includes at least one of following:
a measurement result of a serving cell;
an identifier of the serving cell;
a measurement result of a neighboring cell;
an identifier of the neighboring cell; and
location-related information of the terminal device.

80. The network device according to claim 79, wherein the measurement result includes at least one of a reference signal receiving power (RSRP), a reference signal receiving quality (RSRQ), and a signal to interference plus noise ratio (SINR).

81. The network device according to claim 79 or 80, wherein the location-related information includes at least one of location collection current, longitude and latitude information, and moving speed estimation information.

82. The network device according to any one of claims 73 to 81, wherein the network device further includes a fifth communication module, configured to:
receive first reporting information from the terminal device; wherein the first reporting information includes the RLF associated data related to the first RLF event.

83. The network device according to claim 82, wherein the second processing module is further configured to:
perform training to obtain the first model based on the RLF associated data related to the first RLF event.

84. The network device according to claim 83, wherein the second processing module is further configured to:
extract feature information in the RLF associated data related to the first RLF event, and perform training to obtain the first model based on the feature information.

85. The network device according to claim 83, wherein the second processing module is further configured to:
perform training to obtain the first model based on the RLF associated data related to the first RLF event and non-RLF-related data;
wherein the non-RLF associated data includes at least one of following:
a measurement result of a serving cell within a third time window in a period in which no RLF event occurs;
an identifier of the serving cell;
a measurement result of a neighboring cell within the third time window in the period in which no RLF event occurs;
an identifier of the neighboring cell; and
location-related information of the terminal device within the third time window in the period in which no RLF event occurs.

86. The network device according to claim 82, wherein the network device is an access network device, and the fifth communication module is further configured such that:
the access network device sends the first reporting information to a core network element, the first reporting information being used for the core network element to perform training to obtain the first model.

87. The network device according to any one of claims 82 to 86, wherein the fifth communication module is further configured to perform at least one of following:
receiving the first reporting information in response to that connection re-establishment triggered by the first RLF event is completed;
receiving the first reporting information when a channel of the terminal device is idle; and
sending the first reporting information periodically.

88. The network device according to any one of claims 82 to 87, wherein the first reporting information is carried by a radio resource control (RRC) message, a media access control control element (MAC CE) or an uplink control information (UCI).

89. The network device according to any one of claims 82 to 88, wherein the first reporting information is carried by an RLF report.

90. The network device according to any one of claims 73 to 89, wherein the network device further comprises a sixth communication module, configured to:
send first configuration information to the terminal device; wherein the first configuration information is used for the terminal device to configure the first model.

91. The network device according to claim 90, wherein the sixth communication module is further configured to:
receive second reporting information from the terminal device, the second reporting information being used to indicate the RLF prediction information.

92. The network device according to any one of claims 73 to 89, wherein the network device further comprises: a seventh communication module, configured to receive third reporting information from the terminal device; wherein the third reporting information includes the RLF associated data related to the current moment;
the second processing module is further configured to process the RLF associated data related to the current moment using the first model to obtain the RLF prediction information.

93. The network device according to any one of claims 73 to 92, wherein the first condition includes:
the RLF prediction information indicating that a second RLF event occurs within a first time window after the current moment; or
the RLF prediction information indicates that a probability of the second RLF event occurring within the first time window is greater than a first threshold.

94. The network device according to any one of claims 73 to 93, wherein the RLF prediction information further includes at least one of following:
a first time interval, wherein the first time interval is a time interval between the current moment and a moment when a second RLF event occurs after the current moment;
identifiers of candidate cell(s); and
recommended values of the candidate cell(s).

95. The network device according to any one of claims 73 to 94, wherein the first processing includes cell handover or adjusting a mobile mode.

96. The network device of claim 95, wherein the cell handover includes conditional handover.

97. The network device according to any one of claims 73 to 96, wherein the network device further comprises an eighth communication module, configured to:
send a conditional handover command to the terminal device, wherein the conditional handover command is used to indicate relevant information of N candidate cells and a first conditional event, so that the terminal device selects a first candidate cell from the N candidate cells for access in response to that the first conditional event occurs; the first conditional event includes a conditional event A4, and N is an integer greater than or equal to 1.

98. The network device according to claim 97, wherein the first conditional event further includes a conditional event T1, and a second threshold and/or duration in the conditional event T1 is determined based on a first time interval in the RLF prediction information.

99. A terminal device, comprising: a processor and a memory, the memory being used to store a computer program, the processor being used to call a computer program stored in the memory and run the computer program to cause the terminal device to perform the method according to any one of claims 1 to 23.

100. A network device, comprising: a processor and a memory, the memory being used to store a computer program, the processor being used to call a computer program stored in the memory and run the computer program to cause the network device to perform the method according to any one of claims 24 to 49.

101. A chip, comprising: a processor, configured to call a computer program from a memory and run the computer program to cause a device equipped with the chip to perform the method according to any one of claims 1 to 49.

102. A computer-readable storage medium, configured to store a computer program, when executed by a device, the computer program causing the device to perform the method according to any one of claims 1 to 49.

103. A computer program product, comprising: computer program instructions, wherein the computer program instructions cause a computer to perform the method of any one of claims 1 to 49.

104. A computer program, the computer program causing a computer to perform the method according to any one of claims 1 to 49.

105. A communication system, comprising:
a terminal device, configured to perform the method according to any one of claims 1 to 23; or
a network device, configured to perform the method according to any one of claims 24 to 49.
